# EUROPÄISCHE PATENTSCHRIFT

(11) **EP 1 141 657 B1**
(45) Veröffentlichungstag und Bekanntmachung des Hinweises auf die Patenterteilung: **17.08.2005**
(21) Anmeldenummer: 99963291.2
(22) Anmeldetag: 08.11.1999
(51) Int. Cl.: G01C 21/26, G08G 1/0969

(54) **VERFAHREN UND EINRICHTUNG ZUM LESEN VON NAVIGATIONSDATEN**
METHOD AND DEVICE FOR READING NAVIGATION DATA
PROCEDE ET DISPOSITIF PERMETTANT DE LIRE DES DONNEES DE NAVIGATION

(30) Priorität: 04.12.1998 DE 19856128
(43) Veröffentlichungstag der Anmeldung: 10.10.2001
(73) Patentinhaber: Volkswagen Aktiengesellschaft, 38436 Wolfsburg (DE)
(72) Erfinder: GOLISCH, Frank, D-38124 Braunschweig (DE); KRIEGEL, Dieter, D-38528 Adenbüttel (DE); DOBBERKAU, Thomas, D-38527 Meine (DE); SIEVERS, Stefan, D-38553 Wasbüttel (DE)
(86) Internationale Anmeldenummer: PCT/EP1999/008549
(87) Internationale Veröffentlichungsnummer: WO 2000/034743

(56) Entgegenhaltungen:
- WO-A-96/27842
- US-A- 5 627 547
- PATENT ABSTRACTS OF JAPAN vol. 1997, no. 06, 30. Juni 1997 (1997-06-30) & JP 09 049739 A (FUJITSU TEN LTD), 18. Februar 1997 (1997-02-18)
- PATENT ABSTRACTS OF JAPAN vol. 018, no. 555 (P-1816), 21. Oktober 1994 (1994-10-21) & JP 06 201390 A (SUMITOMO ELECTRIC IND LTD), 19. Juli 1994 (1994-07-19)

## Beschreibung

Die Erfindung betrifft ein Verfahren zum Lesen von Navigationsdaten gemäß Oberbegriff des Anspruchs 1 sowie eine Navigationseinrichtung zur Durchführung des Verfahrens.

Es sind Navigationseinrichtungen bekannt, die dem Fahrer eines Fahrzeugs Leithinweise, die zu einem gewünschten Zielort führen, geben. Die Navigationseinrichtungen arbeiten mit einem globalen Positionierungssystem zusammen, das unter der Bezeichnung GPS allgemein bekannt ist, das unter anderem zur exakten Ortsbestimmung des aktuellen Standorts oder eines gewünschten Zielorts geeignet ist. Die in einem Fahrzeug untergebrachte Navigationseinrichtung kann mit einem Kompaktdisketten-Laufwerk ausgerüstet sein, um Kompaktdisketten, auf denen Straßenkarteninformationen abgespeichert sind, lesen zu können. Anhand der Straßenkarteninformationen kann die Navigationseinrichtung im Zusammenhang mit dem GPS während einer Fahrt von einem Ausgangssort zu einem Zielort ständig Leithinweise geben, die den Fahrer zu dem Zielort hinführen.

Aus der DE 39 04 344 A1 ist ein Verfahren zum Lesen von Navigationsdaten von einer Kompaktdiskette bekannt, die zusammen mit mehreren Audiodisketten in einem CD-Wechsler abspielbereit gelagert sind. Die Navigationsdaten werden von der Datendiskette nur in Abspielpausen der Audiodiskette gelesen, so daß beim Abspielen von Musiktiten störende Unterbrechungen vermieden werden.

Aus der JP 09-062 183 A ist weiterhin eine Navigationseinrichtung bekannt, deren CD-Laufwerk ebenfalls zum Abspielen von Audiodisketten geeignet ist. Die Daten der für die Navigation verwendeten Datendisketten werden in einem Zwischenspeicher abgelegt, so daß dann die Datendiskette entnommen und eine Audiodiskette in das CD-Laufwerk eingelegt werden kann.

Die beiden bekannten Navigationseinrichtungen erfordern einen hohen technischen Aufwand, um mit dem CD-Laufwerk sowohl Datendisketten als auch Audiodisketten lesen bzw. abspielen zu können.

Aus der Japanischen Patentschrift JP-A-09 049 739 ist ein Verfahren und eine Einrichtung bekannt, bei welcher über eine gemeinsame Leseeinheit sowohl eine Musikwiedergabe-Diskette als auch eine Navigationsdaten-Diskette einlesbar ist. Um die Leseeinheit nicht mit der Navigationsdaten-Diskette dauerhaft zu blockieren, und sie stattdessen zum Einlegen der Musik-CD wieder frei zu machen, werden die Navigationdaten in eine Speichereinheit eingelesen. Dabei werden alle verfügbaren d.h. für eine Zielfahrt verfügbaren Navigationsdaten eingelesen und in einem Zwischenspeicher abgespeichert. Dieser muß wegen der Komplettheit des verfügbaren Datensatzes im Hinblick auf sein Speichervolumen sehr groß sein, was für die Verwendung im Kraftfahrzeug von Nachteil ist.

Der Erfindung liegt die Aufgabe zugrunde, ein Verfahren zum Lesen von Navigationsdaten und zum Abspielen von Musikaufnahmen von Kompaktdisketten zu schaffen, welches sich mit möglichst geringem technischen Aufwand realisieren läßt.

Die Lösung dieser Aufgabe erhält man durch die im Anspruch 1 angegebenen Merkmale. Nach dem Lesen der Navigationsdaten von einer Datendiskette kann dieser aus dem CD-Laufwerk entnommen werden und es kann eine Audiodiskette zum Abspielen eingelegt werden. Anhand der Navigationsdaten wird eine Koordinatenbestimmung des eingegebenen Zielorts vorgenommen, so daß während des Abspielens der Audiodiskette ständig Leithinweise in Form einer Richtungsangabe zum Zielort gegeben werden können. Es sind keine umfangreichen Speichermittel erforderlich, um die eingelesenen Navigationsdaten abzuspeichern. Unter Verwendung der Ortskoordinaten des Zielorts und der jeweils aktuellen Ortskoordinaten des Fahrzeugs kann mittels GPS die Richtung zum Zielort ständig aktuell ermittelt werden und beispielsweise in Form eines Richtungspfeils an einer optischen Anzeige dargestellt werden.

Eine vorteilhafte Weiterbildung der Erfindung sieht vor, daß die aktuelle Entfernung zum Zielort ständig angezeigt wird. Dabei kann es sich um die Entfernung per Luftlinie handeln oder um die ungefähr abgeschätzte Restfahrstrecke, die durch Multiplikation der Luftlinienentfernung mit einem Vergrößerungsfaktor ermittelt wird.

Der Erfindung liegt weiterhin die Aufgabe zugrunde, eine Navigationseinrichtung zur Durchführung des erfindungsgemäßen Verfahrens zu schaffen.

Die Lösung dieser Aufgabe wird durch die im Anspruch 5 angegebenen Merkmale erhalten. Das CD-Laufwerk ist ausgangsseitig über eine Schalteinheit 8, die sowohl hardware- als auch softwaremäßig ausgeführt sein kann, wahlweise mit einer Datenverarbeitungseinheit oder mit einem Audiosystem verbindbar. Wird die Datendiskette mit Navigationsdaten in das CD-Laufwerk eingelegt, ist das CD-Laufwerk ausgangsseitig mit der Datenverarbeitungseinheit der Navigationseinrichtung verbunden. Durch einfaches Umschalten läßt sich eine in das CD-Laufwerk eingelegte Audiodiskette abspielen, wobei die dabei gelesene digitale Musikaufnahme von der Audiodiskette einem herkömmlichen Audiosystem zugeführt werden. Der technische Mehraufwand, um das CD-Laufwerk sowohl für das Lesen von Navigationsdaten als auch zum Abspielen von Musiktiteln zu verwenden, erfordert als zusätzliche elektronische Einrichtung lediglich die steuerbare Schalteinheit 8.

Die Datenverarbeitungseinheit der Navigationseinrichtung ist mit einer akustischen und/oder optischen Ausgabeeinheit verbunden, die als Fahrtrichtungsanzeige zu einem Zielpunkt und/oder als Entfernungsanzeige dient, wenn im CD-Laufwerk keine Navigationsdaten enthaltende Datendiskette eingelegt ist. Es erfolgen in diesem Fall also vereinfachte Leithinweise zum gewünschten Zielort, die insbesondere bei Autobahnfahrten, aber auch bei Überlandfahrten für den Fahrer ausreichend sein können. Wird vom Fahrer eine detailliertere Leitfunktion gewünscht, so hat er die Möglichkeit, die Datendiskette mit Navigationsdaten in das CD-Laufwerk einzulegen, worauf er dann in herkömmlicher Weise die vollständigen Leithinweise von der Navigationseinrichtung erhält. Dies wird insbesondere dann zweckmäßig sein, wenn sich der Zielort in einer größeren Stadt befindet und der Fahrer durch die Stadt zum Zielort hingeführt werden soll.

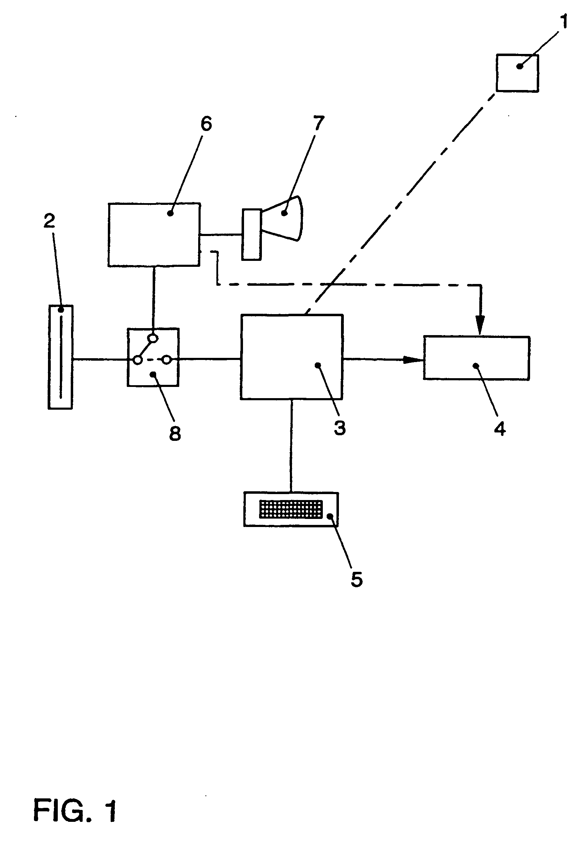

Die Erfindung wird nachfolgend anhand eines in der Zeichnung als Blockschaltbild dargestellten Ausführungsbeispiels näher erläutert.

Das Blockschaltbild zeigt eine Navigationseinrichtung, die mit einem globalen Positionierungssystem 1 in Funkverbindung steht.

Die Navigationseinrichtung umfaßt ein CD-Laufwerk 2, eine Datenverarbeitungseinheit 3 und eine Ausgabeeinheit 4, an der die Leithinweise zu einem über eine Tastatur 5 eingegebenen Zielort erfolgen.

Über eine Schalteinheit 6 steht der Ausgang des CD-Laufwerks wahlweise mit der Datenverarbeitungseinheit 3 oder einem Audiosystem 6 in Verbindung. Das Audiosystem betreibt ausgangsseitig einen Lautsprecher 7 und kann ebenfalls mit der Ausgabeeinheit 4 der Navigationseinrichtung verbunden sein.

In das CD-Laufwerk 2 kann eine Datendiskette mit Navigationsdaten eingelegt werden, wobei dann die Schalteinheit 8 auf den Eingang der Datenverarbeitungseinheit 3 umgeschaltet ist. Auf diese Weise kann die Datenverarbeitungseinheit 3 auf einer Datendiskette abgespeicherte Straßenkarten und weitere Navigationsdaten erhalten, um in Verbindung mit dem Positionssystem 1 Leithinweise an der Ausgabeeinheit 4 bereitzustellen. Die Datenverarbeitungseinheit 3 kann insbesondere auch die Ortskoordinaten des Zielorts festlegen, so daß in Verbindung mit dem Positionssystem 1 die Richtung vom aktuellen Standort des Fahrzeugs zum Zielort ständig angegeben werden kann, auch wenn die Datendiskette aus dem CD-Laufwerk 2 entnommen ist.

Zum Abspielen von Musiktiteln kann eine Audiodiskette in das CD-Laufwerk 2 eingelegt werden, wobei in diesem Fall die Schalteinheit 8 in der dargestellten Schaltstellung verbleibt, so daß die Audio-CD über das Audiosystem 6 abgespielt werden kann.

### BEZUGSZEICHENLISTE

- 1: Positionierungssystem
- 2: CD-Laufwerk
- 3: Datenverarbeitungseinheit
- 4: Ausgabeeinheit
- 5: Tastatur
- 6: Schalteinheit
- 7: Lautsprecher
- 8: Schalteinheit

## Patentansprüche

1. Verfahren zum Lesen von Navigationsdaten und zum Abspielen von Musikaufnahmen von Kompaktdisketten mit einem CD-Laufwerk (2) einer Navigationseinrichtung, mit dem Navigationsdaten von Datendisketten gelesen und Audiodisketten abgespielt werden können, wobei Straßenkarten und/oder andere geographische Daten als Navigationsdaten von einer Datenverarbeitungseinheit (3) zur Bereitstellung von Leithinweisen in Verbindung mit einem globalen Positionierungssystem ausgewertet werden und nach dem Lesen der Navigationsdaten und Eingabe eines Zielpunktes die Datendiskette aus dem CD-Laufwerk (2) entnommen und dann eine Audiodiskette eingelegt werden kann, **dadurch gekennzeichnet, daß** unter Verwendung des eingegebenen Zielorts und der Navigationsdaten eine Koordinatenbestimmung des Zielorts erfolgt, und daß während des Abspielens der Audiodiskette vereinfachte Leithinweise in Form einer Richtungsangabe zum Zielort gegeben werden.

2. Verfahren nach Anspruch 1, **dadurch gekennzeichnet, daß** die aktuelle Entfernung zum Zielpunkt ständig angezeigt wird.

3. Verfahren nach einem der Ansprüche 1 oder 2, **dadurch gekennzeichnet, daß** die ungefähre Restfahrstrecke zum Zielpunkt aus der Entfernung per Luftlinie rechnerisch ermittelt und angezeigt wird.

4. Verfahren nach einem der Ansprüche 1 bis 3, **dadurch gekennzeichnet, daß** die Leithinweise in Form eines Richtungspfeils auf einer optischen Anzeige (4) dargestellt werden.

5. Navigationseinrichtung für ein Kraftfahrzeug, welche ein globales Positionierungssystem, ein CD-Laufwerk (2), mit dem sowohl eine Datendiskette lesbar als auch eine Audiodiskette abspielbar ist, eine Datenverarbeitungseinrichtung (3) und eine Ausgabeeinrichtung (4) umfaßt, wobei die Datenverarbeitungseinrichtung (3) derart ausgebildet ist, daß Navigationsdaten von einer in dem CD-Laufwerk (2) befindlichen Datendiskette lesbar sind und in Abhängigkeit der über das globale Positionierungssystem erfaßten Position des Kraftfahrzeuges und des eingegebenen Zielpunktes Leithinweise auf der Ausgabeeinheit (4) bereitstellbar sind, **dadurch gekennzeichnet, daß** die Datenverarbeitungseinrichtung weiterhin derart ausgebildet ist, daß unter Verwendung des eingegebenen Zielorts und der Navigationsdaten eine Koordinatenbestimmung des Zielorts durchführbar ist und daß während des Abspielens der Audiodiskette vereinfachte Leithinweise in Form einer Richtungsangabe zum Zielort ausgebbar sind.

6. Navigationseinrichtung nach Anspruch 5, **dadurch gekennzeichnet, daß** das CD-Laufwerk (2) ausgangsseitig über eine Schalteinheit (8) wahlweise mit der Datenverarbeitungseinrichtung (3) oder mit dem Audiosystem (6) verbindbar ist.

7. Navigationseinrichtung nach Anspruch 5 oder 6, **dadurch gekennzeichnet, daß** die Datenverarbeitungseinrichtung (3) mit einer akustischen und/oder optischen Ausgabeeinheit (4) verbunden ist, die als Fahrtrichtungsanzeige zu einem Zielpunkt und/oder als Entfemungsanzeige dient, wenn im CD-Laufwerk (2) keine Navigationsdaten enthaltende Datendiskette einliegt.

## Claims

1. Method for reading navigation data and for playing back music recordings from compact discs using a CD drive (2) in a navigation device, said CD drive being able to be used to read navigation data from data disks and to play back audio discs, with road maps and/or other geographical data being evaluated as navigation data by a data processing unit (3) for providing routing advice in connection with a global positioning system and, when the navigation data have been read and a destination has been input, the data disk being removed from the CD drive (2), allowing an audio disc to be inserted, **characterized in that** the destination which has been input and the navigation data are used to determine coordinates for the destination, and **in that** during playback of the audio disc simplified routing advice is given in the form of a direction statement relating to the destination.

2. Method according to Claim 1, **characterized in that** the current distance from the destination is continually displayed.

3. Method according to either of Claims 1 and 2, **characterized in that** the approximate remaining distance to travel to the destination is calculated from the distance as the crow flies and is displayed.

4. Method according to one of Claims 1 to 3, **characterized in that** the routing advice is shown in the form of a directional arrow on a visual display (4).

5. Navigation device for a motor vehicle which (navigation device) comprises a global positioning system, a CD drive (2), which can be used both to read a data disk and to play back an audio disc, a data processing device (3) and an output device (4), with the data processing device (3) being designed such that navigation data can be read from a data disk located in the CD drive (2) and routing advice can be provided on the output unit (4) on the basis of the position of the motor vehicle (detected using the global positioning system) and the destination which has been input, **characterized in that** the data processing device is also designed such that the destination which has been input and the navigation data can be used to determine coordinates for the destination, and **in that** during playback of the audio disc simplified routing advice can be output in the form of a direction statement relating to the destination.

6. Navigation device according to Claim 5, **characterized in that** the output of the CD drive (2) can be connected either to the data processing device (3) or to the audio system (6) by means of a switching unit (8).

7. Navigation device according to Claim 5 or 6, **characterized in that** the data processing device (3) is connected to an audio and/or visual output unit (4) which is used to indicate direction of travel to a destination and/or to indicate distance when the CD drive (2) does not contain a data disk holding navigation data.

## Revendications

1. Procédé pour lire des données de navigation et jouer de la musique enregistrée sur des disques compacts à l'aide d'un lecteur de CD (2) d'un dispositif de navigation qui permet de lire les données de navigation sur des disques de données et de jouer des disques audio, des plans de rues et/ou d'autres données géographiques constituant les données de navigation étant évaluées par une unité (3) de traitement de données pour préparer des indications de guidage en association avec un système de positionnement global, le disque de données pouvant être retiré du lecteur de CD (2) après lecture des données de navigation et introduction d'une destination et un disque audio pouvant être ensuite inséré, **caractérisé en ce que** les coordonnées de la destination sont déterminées en utilisant la destination introduite et les données de navigation et **en ce que** pendant que le disque audio est joué, des indications simplifiées de guidage sont délivrées sous la forme d'une indication de la direction qui conduit à la destination.

2. Procédé selon la revendication 1, **caractérisé en ce que** la distance effective par rapport à la destination est affichée en permanence.

3. Procédé selon les revendications 1 ou 2, **caractérisé en ce que** le chemin qui reste à parcourir avant d'arriver à destination est déterminée par calcul à partir de la distance à vol d'oiseau et est affichée.

4. Procédé selon l'une des revendications 1 à 3, **caractérisé en ce que** les indications de guidage sont présentées sous la forme d'une flèche de direction sur un affichage visuel (4).

5. Système de navigation pour un véhicule automobile, qui comprend un système de positionnement global, un lecteur de CD (2) qui permet à la fois de lire un disque de données et de jouer un disque audio, un dispositif (3) de traitement de données et un dispositif de sortie (4), le dispositif (3) de traitement de données étant configuré de telle sorte que les données de navigation conservées sur le disque placé dans le lecteur de CD (2) peuvent être lues et que des indications de guidage créées à partir de la position du véhicule automobile déterminée par le système de positionnement global et de la destination introduite peuvent être délivrées sur l'unité de sortie (4), **caractérisé en ce que** le dispositif de traitement de données est en outre configuré de telle sorte que les coordonnées de la destination peuvent être déterminées en utilisant la destination introduite et les données de navigation et **en ce que** pendant que le disque audio est joué, des indications simplifiées de guidage peuvent être délivrées sous la forme d'une indication de la direction qui conduit à la destination.

6. Système de navigation selon la revendication 5, **caractérisé en ce qu'**une unité de commutation (8) permet de raccorder la sortie du lecteur de CD (2) sélectivement au dispositif (3) de traitement de données ou au système audio (6).

7. Système de navigation selon les revendications 5 ou 6, **caractérisé en ce que** le dispositif (3) de traitement de données est relié à une unité de sortie (4) acoustique et/ou visuelle qui sert d'affichage de la direction de conduite vers une destination et/ou d'affichage de distance lorsque le lecteur de CD (2) ne contient pas un disque qui contient des données de navigation.
